(19) **Europäisches Patentamt**
**European Patent Office**
**Office européen des brevets**

(11) **EP 1 121 822 B1**

(12) **EUROPEAN PATENT SPECIFICATION**

(45) Date of publication and mention
of the grant of the patent:
**12.12.2007 Bulletin 2007/50**

(51) Int Cl.:
***H04Q 7/38*** *(2006.01)*

(21) Application number: **00953205.2**

(22) Date of filing: **15.08.2000**

(86) International application number:
**PCT/FI2000/000691**

(87) International publication number:
**WO 2001/013666 (22.02.2001 Gazette 2001/08)**

(54) **AUTHENTICATION IN A MOBILE COMMUNICATIONS SYSTEM**

AUTHENTIFIKATION IN EINEM MOBILEN KOMMUNIKATIONSSYSTEM

AUTHENTIFICATION DANS UN SYSTEME DE COMMUNICATION MOBILE

(84) Designated Contracting States:
**AT BE CH CY DE DK ES FI FR GB GR IE IT LI LU
MC NL PT SE**

(30) Priority: **16.08.1999 FI 991733**

(43) Date of publication of application:
**08.08.2001 Bulletin 2001/32**

(73) Proprietor: **EADS Secure Networks Oy
00380 Helsinki (FI)**

(72) Inventor: **STENBERG, Timo
FIN-01600 Vantaa (FI)**

(74) Representative: **Äkräs, Tapio Juhani et al
Kolster Oy Ab,P.O. Box 148,
Iso Roobertinkatu 23
00121 Helsinki (FI)**

(56) References cited:
**EP-A2- 0 673 178          EP-A2- 0 955 783
WO-A1-93/17529          WO-A1-97/15161
WO-A2-96/05702**

## Description

### Field of the invention

The invention relates to authentication in a mobile communications system, and particularly in a system comprising an access network with a first authentication procedure and an overlaying network with a second authentication procedure.

### Background of the invention

A mobile communications system refers generally to any telecommunications system which enables wireless communication when users are moving within the service area of the system. A typical mobile communications system is a Public Land Mobile Network (PLMN). Often the mobile communications network is an access network providing a user with a wireless access to external networks, host, or services offered by specific service providers.

TETRA (Trans-European Trunked Radio) is a standard defined by ETSI (European Telecommunications Standards Institute) for digital professional mobile radio or private mobile radio (PMR) systems. The TETRA system is developed primarily for professional and governmental users, such as police, military forces, oil plants, etc.

In any radio system both the users and the operators should be protected against an undesired intrusion by third parties, whether the intrusion is intentional or not. For example, an illegal access to the network can be prevented by authentication of the mobile station by the network. The risk of eavesdropping can be decreased by use of encryption.

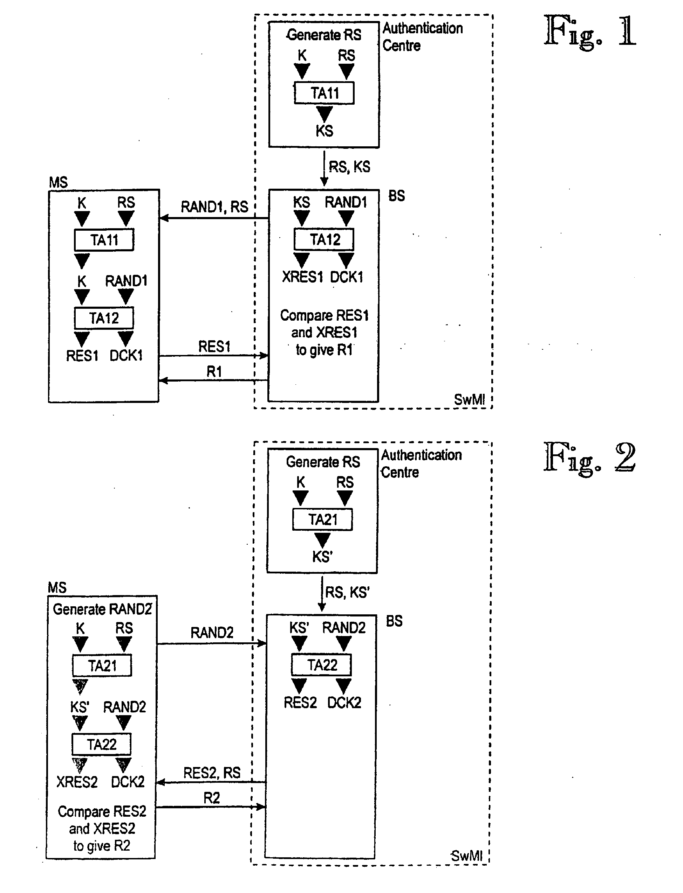

Authentication is a procedure where a party authenticates the other according to an agreed procedure. This is normally based on a common secret which both parties know and compare. As transferring of this secret on the radio path itself presents a security risk, the basic principle is that the authentication information on the radio path is changed each time according a secret algorithm. In the TETRA, the authentication can be divided into authentication of the mobile station by the network in order to prevent illegal access to the network, and authentication of the network by a mobile station in order to prevent the radios from roaming into a fake TETRA system. The authentication of the mobile station is familiar from cellular networks like the GSM (Global System for Mobile Communication), but the authentication of the network by a mobile station is a TETRA-specific feature. The authentication is performed when a radio registers into the system or at the request of the network. The authentication key is stored in the authenticating parties which are the authentication center AuC in the infrastructure and the mobile station MS. The standard TETRA authentication of the user by the infrastructure is illustrated in Figure 1. The secret, the authentication key K, is stored both in the authentication center and in the MS (e.g. in subscriber identification module SIM). The authentication center AuC of the home system of the MS generates a random number (random seed RS), and thereafter carries out a computation of the session authentication key KS by an algorithm TA11 having the inputs K and RS. The authentication center AuC forwards the pair of RS and KS parameters to the base station BS. The base station BS generates a random number as a challenge RAND1 and sends a pair of parameters RAND1 and RS to the MS. The MS derives the session authentication key KS from the authentication key K and the received random seed RS by the algorithm TA11. Thereafter, the MS computes a response RES1 from the session authentication key KS and the received challenge RAND1 by an algorithm TA12 which at the same time produces a derived cipher key DCK1. The MS sends the response RES1 to the BS. The BS will also compute an expected response XRES1 from the challenge RAND1 and the session authentication key KS by the algorithm TA12, also producing the DCK1. The derived cipher key DCK is used by an encryption algorithm for encryption of individual calls. On receipt of the RES1 from the MS, the BS compares it with the XRES1. If the values are equal (i.e. the MS employs the correct authentication key K), the authentication is successful and the result R1 is set to TRUE. If the values are not equal, the MS is not a correct one and the result R1 is set to FALSE.

Authentication of the infrastructure by a user is carried out in the same way except that the roles of the MS and the BS are changed, as illustrated in Figure 2. The MS generates a random number as a challenge as well as an expected response XRES2, and sends the RAND2 to the BS. The BS generates the response RES2 and returns it to the MS. The derived cipher key DCK2 is also generated at the MS and the BS. On receipt of the RES2 from the BS, the MS compares it with the XRES2. If the values are equal the result R2 will indicate that the authentication is successful, otherwise the result R2 will indicate that the authentication has failed. The same authentication key K is used as in the case of authentication of the user by the infrastructure in Figure 2 together with a random seed RS.

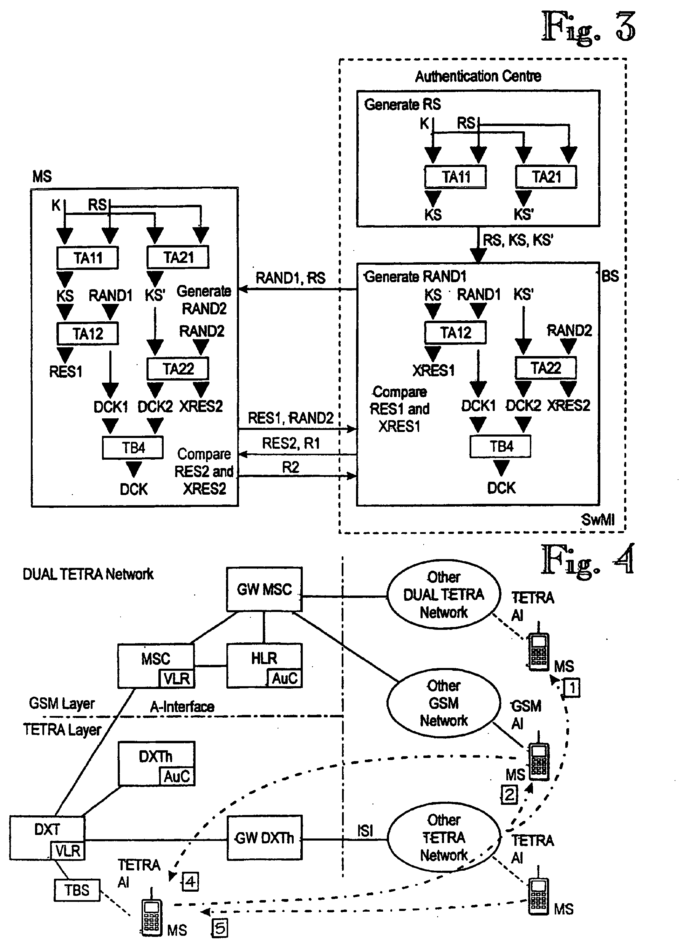

It is also possible to carry out a mutual authentication of user and infrastructure, in which the above procedures are performed in parallel as illustrated in Figure 3

The TETRA authentication procedures and algorithms differ from those of the GSM. The size and the content of authentication triplets are different, too. In the GSM each authentication requires a triplet from the authentication center AuC. In the TETRA the authentication has two phases: 1) the BS gets a triplet from the AuC, and 2) the BS authenticates the MS using this triplet once or several times. These differences prevent dual (or multi) mode mobile stations MS which have both the GSM and TETRA capability from roaming from the TETRA to the GSM, and vice versa.

When a mobile station roams into another network, the authentication information from the home network of the MS must be transferred to the visited network. The visited network has to be somehow connected to the home network. The visited network or the MS or both have to adapt their authentication methods, so that a successful authentication can be performed.

Moreover, TETRA networks will also have to support many of the new services and features which are or will be available in the GSM or the third-generation mobile systems, such as UMTS. The development of the features and services for the TETRA will be an enormous task and therefore it would be more convenient and economical if at least some of the development work already done in the other systems can also be used in the TETRA system,

One approach considered by the present inventor is a new dual TETRA network architecture which consists of a TETRA network layer operating as an access network and an overlaying GSM network layer. The TETRA layer provides all the TETRA-specific features of the system. The overlaying GSM layer which is connected to the TETRA layer via an A-interface provides the GSM-speeific services available to the mobile stations MS via the TETRA layer. In a similar manner the overlaying network layer could be GPRS (General Packet Radio Service) or any other core network. Such a combination of TETRA and GSM networks allows the subscribers to roam in both networks and enables the TETRA network to use some of the GSM features and services. However, the authentication problems described above due to the different authentication procedures of the GSM and the TETRA are encountered also in the dual TETRA network.

WO-A-971516I discloses an arrangement wherein the A3 algorithm of the GSM system is replaced by the CAVE algorithm. The GSM authentication is otherwise unaffected.

EP-A-0955783 which is state of art pursuant to Article 54(3) and (4) only, discloses a method for permitting global roaming between two communication networks which utilize different authentication schemes.

WO-A-9605702 and EP-A-0673178 disclose methods for authenticating a roaming subscriber with its own system even when located in a visited system having a different authentication procedure and authentication format.

WO-A-9317529 discloses a communication system wherein a cordless telephone system is integrated into a mobile radio network, such as the GSM system. The authentication messages to and from the cordless subscriber are transferred through the cordless system to the GSM as embedded into the GSM signalling messages. The GSM system runs both the cordless telephone authentication and the conventional GSM authentication, an appropriate authentication algorithm for each subscriber being selected based on the subscriber type.

**Summary of the invention**

An object of the invention is to overcome or alleviate the authentication problems encountered in a dual network or in roaming between different networks.

These and other objects of the present invention will be achieved by the method, system and mobile station as claimed in the attached independent claims.

In the present invention a radio access network infrastructure, called the radio access network infrastructure layer is connected to a second network infrastructure, called a second overlaying network infrastructure layer, which has different authentication procedures and triplets than the radio access network. The radio access network may be for example a TETRA network which is connected via an A-interface to a network sub-system (NSS) of the GSM and thereby substitutes for the normal GSM base station sub-system (BSS). In the preferred embodiment of the invention the radio access network layer and the overlaying network are combined into a single network called a dual network herein. As noted above, the dual network enables the introduction of new features into the TETRA network by using features as well as network elements already developed for other systems, such as the GSM or the UMTS.

In another embodiment of the invention the overlaying second network infrastructure layer is provided by the home network of a mobile station roaming in the radio access network.

The problem relating to the different authentication schemes is overcome by using the authentication of the overlaying network layer In combination with the authentication procedures of the radio access network layer. When the mobile station first time registers to the system, the mobile station is first authenticated in the overlaying network layer. In this initial authentication the authentication procedures and authentication parameters of the overlaying network, such as the authentication triplet of the GSM, is used. The authentication parameters of the radio access layer, such as the random seed and the random challenge of the TETRA. are derived from the authentication parameters used in the initial authentication. Then the derived authentication parameters are used in any subsequent authentication procedure within the first radio access infrastructure layer until new authentication is needed in the overlaying network infrastructure layer.

In the preferred embodiment of the invention one of the authentication parameters generated in the second network infrastructure layer and the mobile station during the initial authentication is a ciphering key. In accordance with the invention the second ciphering key for the radio access network infrastructure layer is derived from the first ciphering key and is used for ciphering the communication between the mobile station and the first network infrastructure layer.

As the radio access layer authentication parameters are derived from the overlaying layer authentication parameters by specific operations, the original overlaying layer parameters can be restored from the derived authentication parameter at any point within the radio access network. In a preferred embodiment, the overlaying network parameters are translated into appropriate radio access layer authentication parameters which are then transmitted to the mobile station with radio access network signaling, and required authentication parameter(s) will then be restored to the mobile station by an inverse operation and is (are) used by overlaying network layer authentication algorithms.

The present invention provides a number of advantages. For example in a dual TETRA network having the GSM as an overlaying network layer, the GSM-type authentication is possible both in GSM and TETRA networks, i.e. roaming from a dual TETRA to a GSM network, and vice versa, will be possible. Inside the dual TETRA network, standard TETRA authentication procedures (including mutual authentication) can be used. As standard TETRA authentication procedures are used in the TETRA layer, a conventional terminal having no GSM or dual TETRA related features will also work inside TETRA and dual TETRA networks according to the present invention.

## Brief description of the drawings

In the following the invention will be described in more detail by means of preferred embodiments with reference to the attached drawings, wherein

Figure 1 illustrates the standard TETRA authentication of the user by the infrastructure,
Figure 2 illustrates the standard TETRA authentication of the infrastructure by a user,
Figure 3 illustrates the mutual authentication of the infrastructure and the user according to the TETRA standard,
Figure 4 illustrates a dual TETRA network and mobility scenario according to the present invention,
Figure 5 illustrates derivation of the TETRA authentication triplet from the GSM authentication triplet,
Figure 6 illustrates the initial GSM authentication in a dual TETRA network according to the invention, and
Figure 7 illustrates the second-phase TETRA authentication in the dual TETRA network according to the present invention.

## Detailed description of the invention

Preferred embodiments of the invention will be described in the following as implemented in a dual TETRA network, i.e. the radio access network layer is TETRA and the overlaying second network layer is GSM, but the intention is not to restrict the invention to this concept.

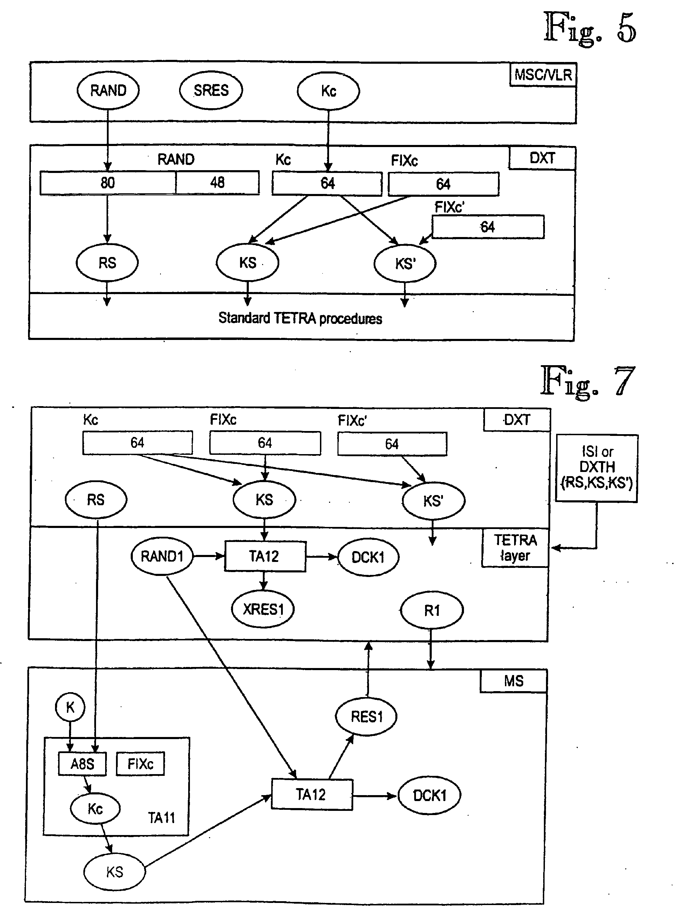

Figure 4 illustrates the dual TETRA architecture. The TETRA network comprises digital exchanges DXT, to which the base stations TBS are connected. An original or a smaller nation-wide network is normally built around several DXT exchanges, which are interconnected by a central digital exchange for the TETRA ($DXT_c$), to form a two-layer star hierarchy and to provide resilient traffic routing and fast call set-up times. The TETRA utilizes a distributor subscriber data base structure so that there is a home location register (HLR) for the network's own subscribers and a visitor location register (VLR) for the visiting subscribers. Typically each DXT is provided with a VLR. There is normally only one HLR which is located at one of the DXTs in the network (referred to as DXTh). Some of the DXTs (GW DXT) provide a gateway to other telecommunication networks. For connecting together different TETRA networks, an intersystem interface (ISI) is defined in the TETRA standard.

The TETRA layer also includes a TETRA-specific authentication center AuC for TETRA authentications. In Figure 4 the TETRA AuC is located in the DXTh. Therefore, the TETRA layer provides all standard features and services of the TETRA to the TETRA users and mobile stations.

In order to introduce new features and services, such as roaming to other networks, an overlaying GSM layer is provided. The canonical GSM architecture distinguishes two parts: the BSS (base station sub-system) and the NSS (network and switching sub-system). The NSS includes the main switching functions of the GSM, as well as the data bases needed for subscriber data and mobility management In the dual TETRA network, the GSM infrastructure layer is formed by a network and switching sub-system (NSS) of the GSM which is connected via an A-interface to the TETRA. Thus, the TETRA network is used as a radio access network for the GSM NSS instead of a conventional GSM BSS. The A-interface may be connected to a DXT in the TETRA layer, as shown in figure 4.

Within the GSM layer, the basic switching function is performed by the MSC (mobile services switching center) whose main function is to coordinate the setting up of calls to and from the dual TETRA users (or GSM users). The MSC has interfaces with the TETRA layer on one side (through which it is in contact with the dual TETRA users), and with external networks on the other. The interface with external networks is for communication with users outside the dual TETRA network. The interworking functions required for the interface to other networks may be concentrated in one of the MSCs, a gateway MSC (GW MSC). Besides MSCs, the GSM layer includes data bases, i.e. home location registers (HLR) and visitors location registers (VLR). Typically, the VLR function is integrated with each MSC. A functional part of the HLR is the authentication center (AuC) managing the security data for the authentication of the subscribers.

This type of a dual TETRA network, i.e. a combination of TETRA and GSM networks, basically allows the subscriber to roam in the TETRA, dual TETRA and GSM networks, and enables the TETRA network to use at least some of the GSM features and services. The mobility scenario includes several roaming possibilities. As illustrated in Figure 4, the subscriber of a dual TETRA network is able to roam (1) from a dual TETRA network A to a dual TETRA network B, and (2) from a dual TETRA network to a GSM network. Similarly, the subscriber of another network is able to roam (4) from a GSM network to a dual TETRA network and (5) from a TETRA network to a dual TETRA network. The subscriber of the GSM network may have a dual mode terminal which is able to operate both in the GSM air interface and the TETRA air interface. Similarly, only a dual TETRA terminal which is able to operate both in the TETRA air interface and the GSM air interface is able to roam to a GSM network. Also SIM roaming is possible; a dual TETRA SIM is used in GSM mobile equipment ME in a GSM network, or vice versa, a GSM SIM is used in dual TETRA ME in a dual TETRA network. However, a dual TETRA terminal which is used only within the dual TETRA network does not necessarily require the GSM air interface capability: it only utilizes the new services provided by the GSM layer in the dual TETRA network. The conventional TETRA terminal can operate both in a dual TETRA network and a standard TETRA network, but it is not able to utilize the services of the GSM layer in the dual TETRA network.

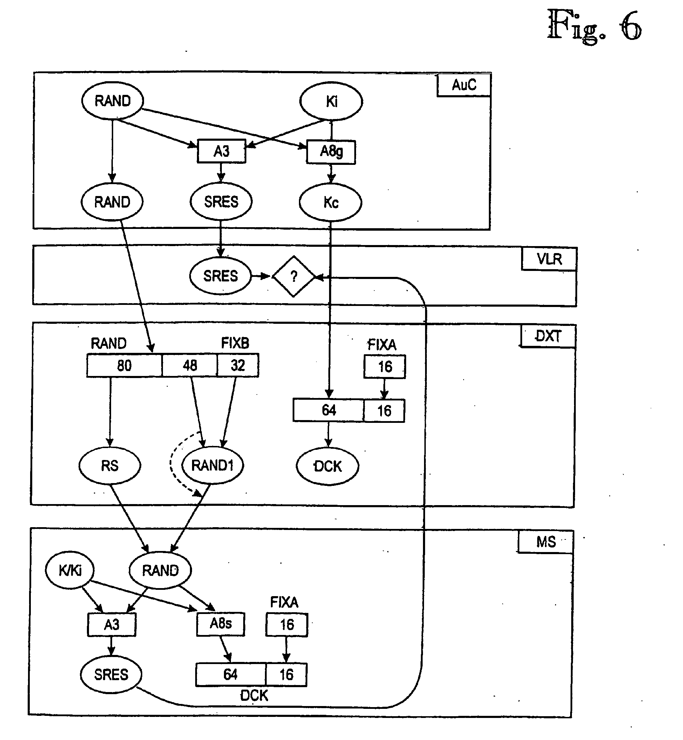

The authentication in the GSM differs from authentication in the TETRA. The security-related network functions of the GSM are defined in the ETSI specification ETS300534 (GMS03.20 version 4.4.1) which is incorporated herein as a reference. The security functions of the TETRA are defined in the ETSI specification ETS300392-7 TETRA V+D; part 7: security, which is incorporated herein as a reference. In the GSM system, the MSC may request authentication parameters for each subscriber MS from the authentication center AuC of the subscriber's MS home network. The AuC is either a separate unit or integrated into the HLR, as illustrated in Figure 4. Referring to Figure 6, the GSM AuC stores a secret authentication key Ki for each subscriber identity. In addition, the AuC generates one or more random challenge numbers RAND. A reference parameter SRES (the expected response) is derived from the RAND and the key Ki by an authentication algorithm A3. Similarly, also an encryption key Kc is computed from the RAND and the Ki by a second authentication algorithm A8. The algorithms A3 and A8 are not specified in the ETSI standard but can be chosen by the network operator. The resulting authentication parameters, the RAND, the SRES and the Kc, are called a GSM authentication triplet.

As noted above, the GSM authentication triplet differs from the authentication triplet (RS, KS, KS') provided by the DXTh/AuC and from the random challenge RAND1 derived by the DXT or the BS in the standard TETRA authentication procedures. Therefore, in accordance with the basic principles of the present invention, the TETRA authentication triplet (RS, KS, KS'), the RAND1 and the encryption key DCK are derived from the -GSM authentication triplet (RAND, SRES, Kc). In the preferred embodiment of the invention this derivation is implemented in the interface between the MSC/VLR and the DXT.

Figure 5 illustrates an example of derivation of the TETRA triplet (RS, KS, KS') from the GSM triplet. The 80-bit Random Seed RS is derived by taking the leftmost 80 bits from the 128-bit RAND:

$$RS = LEFT(RAND, 80) \quad (1)$$

The 128-bit session authentication key KS is derived by concatenating the 64-bit Kc with a fixed 64-bit value FIXC (the Kc is preferably generated by a modified A8 algorithm, as will be described below):

$$KS = Kc + FIXC(64) \quad (2)$$

The 128-bit session authentication key KS' is derived by concatenating the 64-bit Kc with a fixed 64-bit value FIXC':

$$KS' = FIXC'(64) + Kc \quad (3)$$

Due to the derived TETRA parameters, standard TETRA authentication procedures can be used within the TETRA network layer. However, although a 128-bit RAND could be used in the GSM authentication, there are only 80 random bits (the Random Seed RS) available in the succeeding DTETRA authentication. As the KS and KS' will not be transferred over the air interface to the MS, the MS must derive KS and KS' using the secret key K and the RS. For this reason, in the preferred embodiment of the invention, modified authentication algorithms A8 are introduced into the DTETRA AuC in the GSM layer and the DTETRA SIM in the MS. The standard A8 implementation A8g can be presented as follows:

$$Kc[64] = A8g(Ki[128], RAND[128]) \quad (4)$$

wherein Ki and RAND are 128-bit values. The modified algorithm A8g used for calculating Kc in the DTETRA AuC may then be:

$$Kc = A8(Ki, RAND) = A8g(Ki, LEFT(RAND, 80) + FIXD(48)) \quad (5)$$

In other words, the new A8 algorithm has a 'preprocessor' that replaces 48 random bits of the 128-bit RAND with the constant 48 bits of FIXD. There are several ways to choose 80 bits out of 128 bits. They should be evaluated against the operation of the used A8g algorithm in order to find the best one. It should be noted that the selection and derivation methods presented here are only examples. In the above equation, the 80 leftmost bits are chosen. The modified algorithm A8s used for calculating Kc from the 80-bit RS in the DTETRA MS may then be:

$$Kc = A8s(K, RS[80]) = A8g(Ki, RS + FIXD(48)) \quad (6)$$

The MS can now derive KS and KS' using the secret key K and RS as follows

$$KS = Kc + FIXC(64) = A8s(K, RS) + FIXC(64) \quad (7)$$

$$KS' = FIXC'(64) + Kc = FIXC'(64) + A8s(K, RS) \quad (8)$$

**Initial GSM authentication In DTETRA network**

An example of an initial GSM authentication jn a Dual TETRA (DTETRA) network will now be described with reference to Figure 6. This is a simple case of transferring GSM authentication data over the TETRA infrastructure and the air interface AI. In the example case the subscriber of the MS is a DTETRA subscriber, and the MS is provided with a DTETRA subscriber identification module (SIM) instead of a TETRA SIM. The mobile terminal part ME of the MS may be a standard TETRA terminal.

1. The AuC has generated the GSM triplet (RAND, SRES, Kc) with the random generator and algorithms A3 and A8g, as described above.
2. The MSC/VLR obtains the GSM triplet from the AuC and requests authentication due to location update or call setup. The VLR sends (RAND, Kc) to the DXT. SRES is stored in the VLR.
3. The DXT sets the derived ciphering key DCK for TETRA:

$$DCK = Kc + FIXA(16) \quad (9)$$

In other words Kc is concatenated with a 16-bit constant FIXA (LSB bits).
5. The DXT derives the 80-bit Random Seed RS and the 80-bit Random Challenge RAND1:

$$RS = LEFT(RAND, 80) \quad (10)$$

$$RAND1 = FIXB(32) + RIGHT(RAND, 48) \quad (11)$$

In other words, RS is formed by the leftmost 80 bits (MSB) of RAND, and the remaining rightmost 48 bits (LSB) are concatenated with a 32-bit constant FIXB (MSB-bits) so as to form RAND1. 6. The DXT sends a TETRA authentication request (RS, RAND1) to the MS.

7. The mobile equipment part ME of the MS sends RS and RAND1 to the Dual TETRA SIM (i.e. TSIM). The TSIM detects that the leftmost 32-bits of the received RAND1 contain the constant FIXB, i.e. LEFT(RAND1, 32) = FIXB (32), and therefore uses GSM authentication algorithms.

8. The TSIM sets RAND = RS + RIGHT(RAND1, 48), i.e. concatenates RS and the leftmost 48 bits of RAND1 in order to obtain the original RAND.

9. Then the SIM computes DCK = Kc + FIXA(16) = A8s(K, RS) + FIXA(16) and SRES = A3(K, RAND), and returns DCK and SRES to the ME.

10. The ME stores DCK and sends SRES to the DXT as RES1 (i.e. the TETRA parameter).

11. The DXT sends RES1 as SRES to the VLR.

12. The VLR compares the received SRES to the SRES from the GSM triplet, and accepts the authentication, if the SRES values match.

13. The DXT sends the authentication result R1 to the MS.

The steps 7 to 10 of the authentication process in the ME and the SIM will be different, if the ME is provided with a GSM SIM (GSIM), e.g. a GSM subscriber is visiting the DTETRA network. In that case the ME has to have additional dual TETRA functionality. The modified steps 7' to 10' are:

7'.The ME knows the SIM type, and so computes RAND = RS + RIGHT(RAND1, 48), i.e. concatenates RS and the leftmost 48 bits of RAND1 in order to obtain the original.

8'. The ME sends RAND to the GSIM.

9'. Then the GSIM computes Kc = A8(Ki, RAND) and SRES = A3(Ki, RAND), and sends them to the ME.

10'. The ME sets DCK = Kc + FIXA(16), stores DCK and sends SRES to the DXT as RES1 (i.e. the TETRA parameter).

**DTETRA authentication based on preceding GSM authentication**

The TETRA authentication, such as the one described with reference to Figure 2 or 3, may be used when the transactions stay inside the DTETRA network. It is assumed that only ME + TSIM may participate in these transactions, so the AuC that issued the original GSM triplet has special DTETRA algorithms, as described above. An example of how to use the GSM triplet in the $2^{nd}$ phase of TETRA authentication will be described in the following with reference to Figure 7.

1. The DXT cannot calculate the session authentication key KS, because it does not know the TETRA authentication key K. Therefore, the DXT uses information from the preceding GSM authentication in the calculation. In accordance with the equations (7), (8) and (1): KS = Kc + FIXC(64); KS' = FIXC'(64) + Kc; and RS = LEFT(RAND, 80). The DXT also generates a random challenge RAND1 = random. It should be checked that LEFT(RAND1, 32) is not equal to FIXB(32) in order to avoid misinterpretation in the TSIM.

2. The DXT computes the expected response and the ciphering key by the TA12 algorithm in accordance with the TETRA standard

$$\textbf{XRES1, DCK1 = TA12(KS, RAND1)} \quad \textbf{(12)}$$

Also XRES1 and DCK1 are computed by the algorithm TA12. In case of KS' or mutual authentication, RES2 and DCK2 are calculated by the algorithm TA22. In the mutual authentication the final ciphering key is calculated by the algorithm TB4.

3. The DXT sends (RS, RAND1) pair to the MS, where the ME forwards them to the TSIM.

4. The TSIM notices that LEFT(RAND1, 32) <> FIXB(32), and consequently uses the TETRA authentication algorithms.

5. In the TSIM a special TA11 algorithm that uses the A8s algorithm is used for computing KS:

$$\textbf{KS = TA11(K, RS) = A8s(K,RS) + FIXC(64)} \quad \textbf{(13)}$$

Similarly, if the session key KS' is needed, it is computed by a spe**cial TA21 algorithm that uses the A8s algorithm:**

$$\textbf{KS' = TA21(K, RS) = FIXC'(64) + A8s(K,RS)} \quad \textbf{(14)}$$

KS' is needed when the MS tries to authenticate the network, or in mutual authentication.

6. The response RES1 and DCK1 are computed with the algorithm TA12

$$RES1, DCK1 = TA12(KS, RAND1) \quad (15)$$

In case of KS' or mutual authentication, XRES2 and DCK2 are calculated by the algorithm TA22. In the mutual authentication the final ciphering key is calculated by the algorithm TB4.

7. The MS sends RES1 to the DXT which compares RES1 to XRES1. If the values match, the authentication is accepted.

8. The DXT sends the authentication result R1 to the MS.

**Standard TETRA authentication**

If the DXT receives a TETRA authentication triplet (RS, KS, KS') (see Figure 7, Tetra layer), then it will use standard TETRA algorithms. The DTETRA SIM is not used in this case, since DTETRA AuC does not send TETRA authentication triplets.

**GSM authentication in GSM network**

If the ME with DTETRA SIM roams to a GSM network, then the authentication triplet is asked from DTETRA AuC. The SIM receives RAND and returns SRES and Kc.

The description only illustrates preferred embodiments of the invention. The invention is not, however, limited to these embodiments but it may vary within the scope of the appended claims.

**Claims**

1. An authentication method in a mobile communications system comprising a first radio access network infrastructure layer (TETRA) having first authentication procedures and first authentication parameters (RS,RAND1,DCK), and a second overlaying network infrastructure layer (GSM) having second authentication procedures and second authentication parameters (RAND,SRES,$K_c$), **characterized by** steps of

performing the initial authentication of a mobile station (MS) with the second authentication procedures and the second authentication parameters (RAND,SRES,Kc) in order to authenticate the mobile station (MS) in the second overlaying network infrastructure layer (GSM),
deriving the first authentication parameters (RS,RAND1,DCK) for the first radio access network infrastructure layer (TETRA) from said second authentication parameters (RAND,SRES,Kc) during said initial authentication, using said derived first authentication parameters (RS, RAND1, DCK) for any subsequent authentication in the first radio access infrastructure layer (TETRA) until the next initial authentication in the second overlaying network infrastructure layer (GSM).

2. A method as claimed in claim 1, **characterized by** steps of

generating a first ciphering key ($K_c$) for the second overlaying network infrastructure layer (GSM) during said initial authentication in the second overlaying network infrastructure layer and the mobile station (MS),
deriving a second ciphering key (DCK) for the first radio access network infrastructure layer from said first ciphering key in the first radio access network infrastructure layer (TETRA) and the mobile station (MS),
using said second ciphering key (OCK) for ciphering a communication between the mobile station (MS) and the first radio access network infrastructure layer (TETRA) .

3. A method as claimed in claim 1 or 2, **characterized by** steps of

transferring, in accordance with said first authentication procedures, one or more of said derived first authentication parameters (RS,RAND1) to the mobile station (MS) during said initial authentication,
restoring at least one of said second authentication parameters (RAND) from said one or more derived first authentication parameters received in order to enable said initial authentication in the mobile station (MS)

**4.** A method as claimed in claim 1, 2 or 3, **characterized by** steps of

deriving one or more session authentication keys (KS,KS') from a secret authentication key (Kc) in the first radio access network infrastructure layer (TETRA) and the mobile station (MS), said one or more session authentication keys being used in said further authentications in the first radio access network infrastructure layer (TETRA).

**5.** A method as claimed in claim 4, **characterized by** one or more session authentication keys (KS,KS') being used for generating further authentication parameters (RES1,XRES1) in said further authentications.

**6.** A method as claimed in claim 1, 2, 3, 4 or 5, **characterized by** steps of

generating a random challenge number (RAND) in the second overlaying network infrastructure layer (GSM), computing an expected response (SRES) from said random challenge number (RAND) and a secret authentication key (K) by a first authentication algorithm (A3) in the second overlaying network infrastructure layer (GSM), computing a first ciphering key (Kc) from said random challenge number and said secret authentication key (K) by a second authentication algorithm (A8) in the second overlaying network infrastructure layer (GSM), forwarding said random challenge number (RAND) and said ciphering key (Kc) to the first radio access network infrastructure layer (TETRA), translating the random challenge number (RAND) into one or more authentication parameters (RS) of the first radio access network infrastructure layer, deriving a ciphering key (KS,KS') for the first network infrastructure layer (TETRA) from said first ciphering key (Kc), sending said one or more translated authentication parameters (RS,KS) carrying the random challenge number (RAND) to a mobile station (MS) in accordance with the authentication procedures of the first radio access network infrastructure layer, restoring said random challenge number (RAND) from said one or more translated authentication parameters (RS,KS), computing a response (SRES) and said first ciphering key (Kc) from said random challenge number (RAND) and said secret authentication key (K) by said first (A3) and respectively second (A8) authentication algorithms in the mobile station (MS), deriving a second ciphering key (DCK) for the first radio access network infrastructure layer from said first ciphering key (Kc) in the mobile station (MS), sending the response (SRES) to the second overlaying network infrastructure layer (GSM) to be authenticated by comparing with said expected response (XRES), using said one or more translated authentication parameters (RS,KS) and said derived ciphering key in any further authentication procedure and ciphering procedure in the first radio access network infrastructure layer (TETRA) until the next initial authentication in the second overlaying network layer (GSM).

**7.** A method as claimed in claim 6, **characterized in that**

said step of translating said random challenge (RAND) comprises a step of 1) forming an 80-bit random seed from selected 80 bits of the 128-bit random challenge, and 2) combining the remaining 48 bits of the 128-bit random challenge with a predetermined 32-bit constant in order to provide an 80-bit random challenge (RS), said step of restoring said random challenge (RAND) comprises steps of extracting the 48 bits from the 80-bit random challenge (RS), and combining said extracted bits with said 80-bit random seed in order to provide said 128-bit random challenge.

**8.** A method as claimed in claim 6 or 7, **characterized in that** said steps of deriving the second ciphering key (KS) comprises step of combining predetermined additional 16 bits to the 64-bit first ciphering key (Kc) in order to provide the 80-bit second ciphering key.

**9.** A method as claimed in any one of claims 1 to 8, **characterized in that** said second overlaying network infrastructure layer (GSM) is part of another network from which the mobile station is visiting in the first radio-access radio network.

**10.** A method as claimed in any one of claims 1 to 8, **characterized in that** said first radio access network infrastructure layer is a TETRA-type network.

**11.** A method according to claim 1 for authentication of the mobile subscriber roaming in a first radio access network from the second network, **characterized by** steps of

transferring one or more of said derived first parameters to the mobile station over the air interface,
restoring one or more of said second authentication parameters to the mobile station in order to enable the use of authentication algorithms according to said second authentication procedures,
sending an authentication response according to said second authentication procedures from the mobile station to the radio access network with signalling according to said first authentication procedures.

**12.** A method according to claim 11, **characterized by** steps of

deriving a ciphering key used in the communication between the mobile station and the radio access network from one or more of said second authentication parameters.

**13.** A mobile communications system comprising a first radio access network infrastructure layer (TETRA) having first authentication procedures and first authentication parameters (RS,RAND1,KS,KS',DCK), and a second overlaying network infrastructure layer (GSM) having second authentication procedures and second authentication parameters (RAND,SRES,Kc),
**characterized by**

means for performing the initial authentication of a mobile station (MS) with the second authentication procedures and the second authentication parameters (RAND,SRES,Kc) in order to authenticate the mobile station (MS) in the second overlaying network infrastructure layer (GSM),
means for deriving the first authentication parameters (RS,RAND1,KS,KS', DCK) for the first radio access network infrastructure layer (TETRA) from said second authentication parameters (RAND,SRES,Kc) during said initial authentication,
means for using said derived first authentication parameters (RS,RAND1,KS,KS',DCK) for any subsequent authentication in the first radio access network infrastructure layer (TETRA) until the next initial authentication in the second overlaying network infrastructure layer (GSM).

**14.** A system as claimed in claim 13, **characterized by**

the second overlaying network infrastructure layer (GSM) and the mobile station (MS) being arranged to generate a first ciphering key (Kc) for the second overlaying network infrastructure layer during said initial authentication in the second overlaying network infrastructure layer (GSM) and the mobile station (MS),
the first radio access network infrastructure layer (TETRA) and the mobile station (MS) being arranged to derive a second ciphering key (DCK) for the first radio access network infrastructure layer from said first ciphering key (Kc),
the first radio access network infrastructure layer (TETRA) and the mobile station (MS) being arranged to use said second ciphering key (DCK) for ciphering a communication between the mobile station and the first radio access network infrastructure layer.

**15.** A system as claimed in claim 13 or 14, **characterized by**

the first radio access network infrastructure layer (TETRA) being arranged to transfer one or more of said derived first authentication parameters (RS,RAND1) to the mobile station (MS) during said initial authentication,
the mobile station (MS) being arranged to restore at least one of said second authentication parameters (RAND) from said one or more derived first authentication parameters received in order to enable said initial authentication.

**16.** A system as claimed in claim 13, 14 or 15, **characterized by**

the first radio access network infrastructure layer (TETRA) and the mobile station (MS) being arranged to derive one or more session authentication keys (KS,KS') from said first secret authentication key (Kc) in order to be used in said further authentications in the first radio access network infrastructure layer (TETRA).

**17.** A system as claimed in claim 16, **characterized by** the first radio access network infrastructure layer (TETRA) and the mobile station (MS) being arranged to use one or more session authentication keys (KS,KS') for generating further authentication parameters (RES1,XRES1) in said further authentications.

**18.** A system as claimed in claim 13, **characterized by**

means for transferring one or more of said derived first parameters (RS,RAND1) to the mobile station over the air interface,
means for restoring one or more of said second authentication parameters (RAND) to the mobile station in order to enable the use of authentication algorithms (A3,A8s) according to said second authentication procedures,
means for sending an authentication response (SRES) according to said second authentication procedures from the mobile station (MS) to the first radio access network (TETRA) with signalling according to said first authentication procedures.

**19.** A system according to claim 18, **characterized by**

means for deriving a ciphering key (DCK) used in the communication between the mobile station (MS) and the first radio access network (TETRA) from one or more of said second authentication parameters (Kc).

**20.** A mobile station for a mobile communications system comprising a first radio access network infrastructure layer (TETRA) having first authentication procedures and first authentication parameters (RS,RAND1, KS,KS', DCK), and a second overlaying network infrastructure layer (GSM) having second authentication procedures and second authentication parameters (RAND,SRES,Kc), **characterized by**

means for receiving one or more first authentication parameters (SS,RAND1) from the first radio access network infrastructure layer (TETRA) during an initial authentication with the second authentication procedures and the second authentication parameters in order to authenticate the mobile station in the second overlaying network infrastructure layer,
means for /deriving one or more of the second authentication parameters (RAND) from said received one or more of the first parameters,
means for computing a first ciphering key (Kc) and a response (SRES) from said derived one or more second authentication parameters (RAND) by authentication algorithms (A3,A8s) of the second overlaying network authentication procedures,
means, for deriving a second ciphering key (DCK) for the first radio access network infrastructure layer ciphering from said first ciphering key (Kc),
means for sending said computed response (SRES) to the network infrastructure.

**21.** A mobile station according to claim 20, **characterized by**

means for deriving one or more session authentication keys (KS,KS') from said first ciphering key (Kc),
means for using said derived one or more session authentication keys (KS,KS') in any first authentication procedures subsequent to the initial authentication.

**Patentansprüche**

**1.** Authentifizierungsverfahren in einem mobilen Kommunikationssystem umfassend eine erste Funkzugangsnetzwerk-Infrastrukturschicht (TETRA) mit ersten Authenfifizierungsprozeduren und ersten Authentifizierungsparametern (RS, RAND1, DCK) und eine zweite darüber liegende Netzwerk-Infrastrukturschicht (GSM) mit zweiten Authentifizierungsprozeduren und zweiten Authentifizierungsparametern (RAND, SRES, Kc), **gekennzeichnet durch** die Schritte:

Durchführen der Erstauthentifizierung einer Mobilstation (MS) mit den zweiten Authentifizierungsprozeduren und den zweiten Authentifizierungsparametern (RAND, SRES, Kc), um die Mobilstation (MS) in der zweiten darüber liegenden Netzwerk-Infrastrüktürschicht (GSM) zu authentifizieren, Ableiten der ersten Authentifizierungsparametern (RS, RAND1, DCK) für die erste Funkzugangsnetzwerk-Infrastrukturschicht (TETRA) aus den zweiten Authentifizierungsparametern (RAND, SRES, Kc) während der Erstauthentifizierung,
Verwenden der abgeleiteten ersten Authentifzierungsparameter (RS, RAND1, DCK) für jede nachfolgende Authentifizierung in der ersten Funkzugangs-Infrastrukturschicht (TETRA) bis zu der nächsten Erstauthentifizierung in der zweiten darüber liegenden Netzwerk-infrastrukturschicht (GSM).

**2.** Verfahren gemäß Anspruch 1, **gekennzeichnet durch** die Schritte:

Erzeugen eines ersten Verschlüsselungsschlüssels (Kc) für die zweite darüber liegende Netzwerk-Infrastrukturschicht (GSM) während der Erstauthentifizierung in der zweiten darüber liegenden Netzwerkfnfrastrukturschicht und der Mobilstationen (MS),

Ableiten eines zweiten Verschlüsselungsschiüssels (DCK) für die erste Funknetzwerk-Infrastrukturschicht aus dem ersten Verschlüsselungsschlüssel in der ersten Funkzugangsnetzwerk-Infrastrukturschicht (TETRA) und der Mobilstation (MS),

Verwenden des zweiten Verschlüsselungsschlüssels (DCK) zum Verschlüsseln einer Kommunikation zwischen der Mobilstation (MS) und der ersten Funkzugangsnetzwerk-Infrastrukturschicht (TETRA).

**3.** Verfahren gemäß Anspruch 1 oder 2, **gekennzeichnet durch** die Schritte:

Übertragen in Übereinstimmung mit den ersten Authentifizierungsprozeduren eines oder mehrerer der abgeleiteten ersten Authentifizierungsparameter (RS, RAND1) an die Mobilstation (MS) während der Erstauthentifizierung,

Wiederherstellen wenigstens eines der zweiten Authentifizierungsparameter (RAND) aus dem einen oder mehreren empfangenen abgeleiteten ersten Authentifizierungsparametern, um die Erstauthentifizierung in der Mobilstation (MS) zu ermöglichen.

**4.** Verfahren gemäß Anspruch 1, 2 oder 3, **gekennzeichnet durch** die Schritte:

Ableiten eines oder mehrerer Sitzungsauthentifizierungsschlüssel (KS, KS') aus einem geheimen Authentifizierungsschlüssel (Kc) in der ersten Funkzugangsnetzwerk-Infrastrukturschicht (TETRA) und der Mobilstation (MS), wobei ein oder mehrere Sitzungsauthentifizierungsschlüssel bei den weiteren Authentifizierungen in der ersten Funkzugangsnetzwerk-Infrastrukturschicht (TETRA) verwendet werden.

**5.** Verfahren gemäß Anspruch 4, **dadurch gekennzeichnet, dass** einer oder mehrere Sitzungsauthentifizierungsschlüssel (KS, KS) zum Erzeugen weiterer Authentifizierungsparameter (RES1, XRES1) bei den weiteren Authentifizierungen verwendet werden.

**6.** Verfahren gemäß Anspruch 1, 2, 3, 4 oder 5, **gekennzeichnet durch** die Schritte:

Erzeugen einer Zufallsanfragezahl (RAND) in der zweiten darüber liegenden Netzwerk-Infrastrukturschicht (GSM),

Berechnen einer erwarteten Antwort (SRES) aus der Zufall-Herausforderungszahl (RAND) und einem geheimen Authentifizierungsschlüssel (K) **durch** einen ersten Authentifizierungsalgorithmus (A3) in der zweiten darüber liegenden Netzwerk-Infrastrukturschicht (GSM), Berechnen eines ersten Verschlüsselungsschlüssels (Kc) aus der Zufall-Herausforderungszahl und dem geheimen Authentifizierungsschlüssel (K) durch einen zweiten Authentifizieruragsaigorithmus (A8) in der zweiten darüber liegenden Netzwerk-Infrastrukturschicht (GSM),

Weiterleiten der Zufall-Herausforderungszahl (RAND) und des Verschlüsselungsschlüssel (Kc) an die erste Funkzugangsnetzwerk-Infrastrukturschicht (TETRA),

Übersetzen der Zufallsanfragezahl (RAND) in einen oder mehrere Authentifizierungsparameter (RS) der ersten Funkzugangsnetzwerk-Infrastrukturschicht,

Ableiten eines Verschlüsselungsschlüssels (KS, KS') für die erste Netzwerk-Infrastrukturschicht (TETRA) aus dem ersten Verschlüsselungsschlüssel (Kc),

Senden des einen oder der mehreren übersetzten Authentifizierungsparameter (RS, KS), welche die Zufall-Herausforderungszahl (RAND) tragen, an eine Mobilestation (MS) in Übereinstimmung mit den Authentifizierungsprozeduren der ersten Funkzugangsneizwerk-Infrastrukturschicht,

Wiederherstellen der Zufall-Herausforderungszahl (RAD) aus dem einen oder den mehreren übersetzten Authentifzierungsparametern (RS, KS), Berechnen einer Antwort (SRES) und des ersten Verschlüssetungsschlüssels (Kc) aus der Zufall-Herausforderungszahl (RAND) und dem geheimen Authentifizierungsschlüssel (K) **durch** den ersten (A3) und entsprechenden zweiten (A8) Authentifizierungsalgorithmus in der Mobilstation MS), Ableiten eines zweiten Verschlüsselungsschlüssels (DCK) für die erste Funkzugangsnetzwerk-Infrastrukturschicht aus dem ersten Verschlüsselungsschlüssel (Kc) in der Mobilstation (MS),

Senden der Antwort (SRES) an die zu authentifizierende zweite darüber liegende Netzwerk-Infrastrukturschicht (GSM) **durch** Vergleichen mit der erwarteten Antwort (XRES),

Verwenden des einen oder der mehreren übersetzten Authentifizierungsparameter (RS; KS) und des abgeleiteten Verschlüsselungsschlüssels bei jeder weiteren Authentifizierungsprozedur und Verschlüsselungsprozedur in der ersten Funkzugangsnetzwerk-Infrastrukturschicht (TETRA) bis zu der nächsten Erstauthentifizierung in der zweiten darüber liegenden Netzwerkschicht(GSM).

7. Verfahren gemäß Anspruch 6, **dadurch gekennzeichnet,**

**dass** der Schritt des Übersetzens der Zufallsanfrage (RAND) umfasst einen Schritt 1) Bilden eines 80-Bit-Zufallskeims aus ausgewählten 80 Bit der 128-Bit-Zufallsanfrage, und 2) Kombinieren der verbleibenden 48 Bits der 128-Bit-Zufallsanfrage mit einer vorbestimmten 32-Bit-Konstanten, um eine 80-Bit-Zufallsanfrage (RS) bereitzustellen,
**dass** der Schritt des Wiederherstellens der Zufallsanfrage (RAND) umfasst Schritte des Entnehmens der 48-Bit aus der 80-Bit Zufallsanfrage (RS), und Kombinieren der entnommenen Bits mit den 80-Bit-Zufallskeim, um die 128-Bit-Zufallsanfrage bereitzustellen.

8. Verfahren gemäß Anspruch 6 oder 7, **dadurch gekennzeichnet, dass** die Schritte des Ableitens des zweiten Verschlüsselungsschlüssels (KS) umfassen einen Schritt des Kombinierens vorbestimmter zusätzlicher 16 Bits mit dem ersten 64-Bit-Verschlüsselungsschlüssel (Kc), um den zweiten 80-Bit-Verschlüsselungsschlüssel bereitzustellen.

9. Verfahren gemäß einem der Ansprüche 1 bis 8, **dadurch gekennzeichnet, dass** die zweite darüber liegende Netzwerk-Infrastrukturschicht (GSM) Teil eines anderen Netzwerks ist, von dem die Mobilstation aus das erste Funkzugangsfunknetzwerk besucht.

10. Verfahren gemäß einem der Ansprüche 1 bis 8, **dadurch gekennzeichnet, dass** die erste Funkzugangsnetzwerk-Infrastrukturschicht ein Netzwerk vom TETRA-Typ ist.

11. Verfahren gemäß Anspruch 1 zum Authentifizieren des mobilen Teilnehmers, der in einem ersten Funkzugangsnetzwerk von dem zweiten Netzwerk auswandert,
**gekennzeichnet durch** die Schritte:

Übertragen eines oder mehrerer der abgeleiteten ersten Parameter an die Mobilstation über die Luftschnittstelle, Wiederherstellen eines oder mehrerer der zweiten Authentifizierungsparameter an die Mobilstation, um die Verwendung von Authentifizierungsalgorithmen gemäß den zweiten Authentifizierungsprozeduren zu ermöglichen, Senden einer Authentifizierungsantwort gemäß den zweiten Authentifizierungsprozeduren von der Mobilstation an das Funkzugangsnetzwerk mit Signalisierung gemäß den ersten Authentifizierungsprozeduren.

12. Verfahren gemäß Anspruch 11, **gekennzeichnet durch** die Schritte:

Ableiten eines Verschlüsselungsschlüssels, der bei der Kommunikation zwischen der Mobilstation und dem Funkzugangsnetzwerk verwendet wird, aus einem oder mehreren der zweiten Authentifizierungsparameter.

13. Mobiles Kommunikationssystem umfassend eine erste Funkzugangsnetzwerk-Infrastrukturschicht (TETRA) mit ersten Authentifizierungsprozeduren und ersten Authentifizierungsparametern (RS, RAND1, KS, KS', DCK) und einer zweiten darüber liegenden Netzwerk-Infrastrukturschicht (GSM) mit zweiten Authentifizierungsprozeduren und zweiten Authentifizierungsparametern (RAND, SRES, Kc), **gekennzeichnet durch**

Mittel zum Durchführen der Erstauthentifizierung einer Mobilstation (MS) mit den zweiten Authentifizierungsprozeduren und den zweiten Authentifizierungsparametern (RAND, SRES, Kc), um die Mobilstation (MS) in der darüber liegenden zweiten darüber liegenden Netzwerk-Infrastrukturschicht (GSM) zu authentifizieren, Mittel zum Ableiten der ersten Authentifizierungsparameter (RS, RAND1, KS, KS', DCK) für die erste Funkzugangsnetzwerk-Infrastrukturschicht (TETRA) aus den zweiten Authentifizierungsparametern (RAND, SRES, Kc) während der Erstauthentifizierung, Mittel zum Verwenden der abgeleiteten ersten Authentifizierungsparameter (RS, RAND1, KS, KS', DCK) für jede nachfolgende Authentifizierung in der ersten Funkzugangsnetzwerk-Infrastrukturschicht (TETRA) bis zu der nächsten Erstauthentifizierung in der zweiten darüber liegenden NetzwerkInfrastrukturschicht (GSM).

14. System gemäß Anspruch 13, **dadurch gekennzeichnet,**

**dass** die zweite darüber liegende Netzwerk-Infrastrukturschicht (GSM) und die Mobilstation (MS) eingerichtet sind, einen ersten Verschlüsseiungsschlüssel (Kc) für die zweite darüber liegende Natzwerk-Infrastrukturschicht. während der Erstauthentifizierung in der zweiten darüber liegenden Netzwerk-Infirastrukturschicht (GSM) und der Mobilstation (MS) zu erzeugen, dass die erste Funkzugangsnetzwerk-Infrastrukturschicht (TETRA) und die Mobilstation (MS) eingerichtet sind, einen zweiten Verschlüsselungsschlüssel (DCK) für die erste Funkzugangsnetzwerk-Infrastrukturschicht aus dem ersten Verschlüsselungsschlüssel (Kc) abzuleiten,
**dass** die erste Furikzugangsnetzwerk-Infrastrukturschicht (TETRA) und die Mobilstation (MS) eingerichtet sind, den zweiten Verschlüsselungsschlüssel (DCK) zum Verschlüsseln einer Kommunikation zwischen der Mobilstation und der ersten Funkzugangsnetzwerk-Infrastrukturschicht zu verwenden.

15. System gemäß Anspruch 13 oder 14, **dadurch gekennzeichnet,**

   **dass** die erste Funkzugangsnetzwerk-Infrastrukturschicht (TETRA) eingerichtet ist, einen oder mehrere der abgeleiteten ersten Authentifizierungsparameter (RS, RAND1) an die Mobilstation (MS) während der Erstauthentifizierung zu übertragen,
   **dass** die Mobilstation (MS) eingerichtet ist, wenigstens einen der zweiten Authentifizierungsparameter (RAND) aus dem einen oder den mehreren abgeleiteten ersten Authentifizierungsparametern, die empfangen wurden, wiederherzustellen, um die Erstauthentifizierung zu ermöglichen.

16. System gemäß Anspruch 13, 14 oder 15, **dadurch gekennzeichnet,**

   **dass** die erste Eunkzugängsnetzwerk-Infrastrukturschicht (TETRA) und die Mobilstation (MS) eingerichtet sind, einen oder mehrere Sitzungsauthentifizierungsschlüssel (KS, KS') aus dem ersten geheimen Authentifizierungsschlüssel (Kc) abzuleiten, um bei den weiteren Authentifizierungen in der ersten Funkzugangsnetzwerk-Infrastrukturschicht (TETRA) verwendet zu werden.

17. System gemäß Anspruch 16, **dadurch gekennzeichnet, dass** die erste Funkzugangsnetzwerk-Infrastrukturschicht (TETRA) und die Mobilstation (MS) eingerichtet sind, einen oder mehrere Sitzungsauthentifizierungsschlüssel (KS, KS') zum Erzeugen weiterer Authentifizierungsparameter (RES1, XRES1) bei den weiteren Authentifizierungen zu verwenden.

18. System gemäß Anspruch 13, **gekennzeichnet durch**

   Mittel zum Übertragen eines oder mehrere der abgeleiteten ersten Parameter (RS, RAND1) an die Mobilstation über die Luftschnittstelle,
   Mittel zum Wiederherstellen eines oder mehrerer der zweiten Authentifizierungsparameter (RAND) an die Mobilstation, um die Verwendung von Authentifizierungsalgorithmen (A3, A8s) gemäß den zweiten Authentifizierungsprozeduren zu ermöglichen,
   Mittel zum Senden einer Authentifizierungsantwort (SRES) gemäß dem zweiten Authentifizierungsprozeduren von der Mobilstation (MS) an das erste Funkzugangsnetzwerk (TETRA) mit Signalisierung gemäß den ersten Authentifizierungsprozeduren.

19. System gemäß Anspruch 18, **gekennzeichnet durch**

   Mittel zum Ableiten eines Verschlüsselungsschlüssel (DCK), der bei der Kommunikation zwischen der Mabilstation (MS) und dem ersten Funkzugangsnetzwerk (TETRA) verwendet wird, aus einem oder mehreren der zweiten Authentifizierungsparametern (Kc).

20. Mobilstation für ein mobiles Kommunikationssystem umfassend eine erste Funkzügangsnetzwerk-Infrastrukturschicht (TETRA) mit ersten Authentifizierungsprozeduren und ersten Authentifizierungsparameter (RS, RAND1, KS, KS', DCK) und eine zweite darüber liegende Netzwerkinfrastruktur Schicht (GSM) mit zweiten Authentifizierungsprozeduren und zweiten Authentifizierungsparametern (RAND, SRES, Kc), **gekennzeichnet durch** Mittel zum Empfangen eines oder mehrerer erster Authentifizierungsparameter (SS, RAND1) von der ersten Funkzugangsnetzwerk-Infrastrukturschicht (TETRA) während einer Erstauthentifizierung mit den zweiten Authentifizierungsprozeduren und den zweiten Authentifizierungsparametern, um die Mobilstation in der zweiten darüber liegenden Netzwerkinfrastruktur Schicht zu authentifizieren,

   Mittel zum Ableiten eines oder mehrerer der zweiten Authentifizierungsparameter (RAND) aus dem empfangenen einen oder den mehreren der ersten Parameter,

Mittel zum Berechnen eines ersten Verschlüsselungsschlüssels (Kc) und einer Antwort (SRES) aus den abgeleiteten einen oder mehreren zweiten Authentifzierungsparametern (RAND) **durch** Authentifizierungsalgorithmen (A3, A8s) der zweiten Authentifizierungsprozeduren des darüber liegenden Netzwerks,

Mittel zum Ableiten eines zweiten Verschlüsselungsschlüssels (DCK) für die Verschlüsselung der ersten Funkzugangsnetzwerk-Infrastrukturschicht aus dem ersten Verschlüsselungsschlüssel (Kc),

Mittel zum Senden der berechneten Antwort (SRES) an die Netzwerkinfrastruktur.

**21.** Mobilstation gemäß Anspruch 20, **gekennzeichnet durch**

Mittel zum Ableiten eines oder mehrerer Sitzungsauthentifizierungsschfüssel (KS, KS) aus dem ersten Verschlüsselungsschlüssel (Ke),

Mittel zum Verwenden der abgeleiteten ersten oder mehreren Sitzungsauthentifizierungsschlüssel (KS, KS') bei allen der Erstauthentifizierung nachfolgenden ersten Authentifizierungsprozeduren.

## Revendications

**1.** Procédé d'authentification dans un système de communication mobile comportant une première couche d'infrastructure de réseau d'accès radio (TETRA) présentant des premières procédures d'authentification et des premiers paramètres d'authentification (RS, RAND1, DCK), et une seconde couche d'infrastructure de réseau superposée (GSM) présentant des secondes procédures d'authentification et des seconds paramètres d'authentification (RAND, SRES, Kc), **caractérisé par** les étapes consistant à

exécuter l'authentification initiale d'une station mobile (MS) avec les secondes procédures d'authentification et les seconds paramètres d'authentification (RAND, SRES, Kc) afin d'authentifier la station mobile (MS) dans la seconde couche d'infrastructure de réseau superposée (GSM),

dériver les premiers paramètres d'authentification (RS, RAND1, DCK) pour la première couche d'infrastructure de réseau d'accès radio (TETRA) à partir desdits seconds paramètres d'authentification (RAND, SRES, Kc) au cours de ladite authentification initiale,

utiliser les premiers paramètres d'authentification dérivés (RS, RAND1, DCK) pour une quelconque authentification subséquente dans la première couche d'infrastructure d'accès radio (TETRA) jusqu'à l'authentification initiale suivante dans la seconde couche d'infrastructure de réseau superposée (GSM).

**2.** Procédé selon la revendication 1, **caractérisé par** des étapes consistant à

générer une première clef de chiffrement (Kc) pour la seconde couche d'infrastructure de réseau superposée (GSM) au cours de ladite authentification initiale dans la seconde couche d'infrastructure de réseau superposée et dans la station mobile (MS),

dériver une seconde clef de chiffrement (DCK) pour la première couche d'infrastructure de réseau d'accès radio à partir de ladite première clef de chiffrement dans la première couche d'infrastructure de réseau d'accès radio (TETRA) et la station mobile (MS),

utiliser ladite seconde clef de chiffrement (DCK) pour chiffrer une communication entre la station mobile (MS) et la première couche d'infrastructure de réseau d'accès radio (TETRA).

**3.** Procédé selon la revendication 1 ou 2, **caractérisé par** des étapes consistant à

transférer, selon lesdites premières procédures d'authentification, un ou plusieurs desdits premiers paramètres d'authentification dérivés (RS, RAND1) à la station mobile (MS) au cours de ladite authentification initiale,

récupérer au moins un desdits seconds paramètres d'authentification (RAND) à partir dudit un ou plusieurs premiers paramètres d'authentification dérivés reçus afin de permettre ladite authentification initiale dans la station mobile (MS).

**4.** Procédé selon la revendication 1, 2 ou 3, **caractérisé par** des étapes consistant à

dériver une ou plusieurs clefs d'authentification de session (KS, KS') à partir d'une clef d'authentification secrète (Kc) dans la première couche d'infrastructure de réseau d'accès radio (TETRA) et dans la station mobile (MS), ladite une ou lesdites plusieurs clefs d'authentification de session étant utilisée(s) dans d'autres authentifications dans la première couche d'infrastructure de réseau d'accès radio (TETRA).

5. Procédé selon la revendication 4, **caractérisé par** l'utilisation d'une ou plusieurs clefs d'authentification de session (KS, KS') en vue de générer d'autres paramètres d'authentification (RES1, XRES1) dans lesdites autres authentifications.

6. Procédé selon la revendication 1, 2, 3, 4 ou 5, **caractérisé par** des étapes consistant à

générer un nombre aléatoire de challenge (RAND) dans la seconde couche d'infrastructure de réseau superposée (GSM),
calculer une réponse attendue (SRES) à partir dudit nombre aléatoire de challenge (RAND) et une clef d'authentification secrète (K) par un premier algorithme d'authentification (A3) dans la seconde couche d'infrastructure de réseau superposée (GSM),
calculer une première clef de chiffrement (Kc) à partir dudit nombre aléatoire de challenge et ladite clef d'authentification secrète (K) par un second algorithme d'authentification (A8) dans la seconde couche d'infrastructure de réseau superposée (GSM),
acheminer ledit nombre aléatoire de challenge (RAND) et ladite clef de chiffrement (Kc) à la première couche d'infrastructure de réseau d'accès radio (TETRA),
traduire le nombre aléatoire de challenge (RAND) en un ou plusieurs paramètres d'authentification (RS) de la première couche d'infrastructure de réseau d'accès radio,
dériver une clef de chiffrement (KS, KS') pour la première couche d'infrastructure de réseau (TETRA) à partir de ladite première clef de chiffrement (Kc),
transmettre ledit un ou lesdits plusieurs paramètres d'authentification traduits (RS, KS) portant le nombre aléatoire de challenge (RAND) à une station mobile (MS) selon les procédures d'authentification de la première couche d'infrastructure de réseau d'accès radio,
rétablir ledit nombre aléatoire de challenge (RAND) à partir dudit un ou desdits plusieurs paramètres d'authentification traduits (RS, KS),
calculer une réponse (SRES) et ladite première clef de chiffrement (Kc) à partir dudit nombre aléatoire de challenge (RAND) et ladite clef d'authentification secrète (K) par lesdits premier (A3) et respectivement second algorithmes d'authentification (A8) dans la station mobile (MS),
dériver une seconde clef de chiffrement (DCK) pour la première couche d'infrastructure de réseau d'accès radio à partir de ladite première clef de chiffrement (Kc) dans la station mobile (MS),
transmettre la réponse (SRES) à la seconde couche d'infrastructure de réseau superposée (GSM) à authentifier en comparant avec ladite réponse attendue (XRES),
utiliser ledit un ou lesdits plusieurs paramètres d'authentification traduits (RS, KS) et ladite clef de chiffrement dérivée dans un quelconque procédé d'authentification et un quelconque procédé de chiffrement ultérieurs dans la première couche d'infrastructure de réseau d'accès radio (TETRA) jusqu'à l'authentification initiale successive dans la seconde couche de réseau superposée (GSM).

7. Procédé selon la revendication 6, **caractérisé en ce que** ladite étape de traduction dudit nombre aléatoire de challenge (RAND) comporte une étape consistant à 1) former une valeur de départ aléatoire de 80 bits à partir de 80 bits sélectionnés du challenge aléatoire de 128 bits, et 2) combiner les 48 bits restants du challenge aléatoire de 128 bits avec une constante de 32 bits prédéterminée afin de fournir un challenge aléatoire de 80 bits (RS),

ladite étape de rétablissement dudit challenge aléatoire (RAND) comporte des étapes consistant à extraire les 48 bits à partir du challenge aléatoire de 80 bits (RS), et à combiner lesdits bits extraits avec ladite valeur de départ aléatoire de 80 bits afin de fournir ledit challenge aléatoire de 128 bits.

8. Procédé selon la revendication 6 ou 7, **caractérisé en ce que** les étapes consistant à dériver la seconde clef de chiffrement (KS) comportent l'étape consistant à combiner les 16 bits supplémentaires prédéterminés à la première clef de chiffrement de 64 bits (Kc) afin de fournir la seconde clef de chiffrement de 80 bits.

9. Procédé selon l'une quelconque des revendications 1 à 8, **caractérisé en ce que** ladite seconde couche d'infrastructure de réseau superposée (GSM) fait partie d'un autre réseau à partir duquel la station mobile effectue une visite dans le premier réseau d'accès radio.

10. Procédé selon l'une quelconque des revendications 1 à 8, **caractérisé en ce que** ladite première couche d'infrastructure de réseau d'accès radio est un réseau de type TETRA.

**11.** Procédé selon la revendication 1 en vue de l'authentification de l'abonné mobile en itinérance dans un premier réseau d'accès radio du second réseau, **caractérisé par** les étapes consistant à

transférer un ou plusieurs desdits premiers paramètres dérivés à la station mobile sur l'interface radio, rétablir un ou plusieurs desdits seconds paramètres d'authentification à la station mobile afin de permettre l'utilisation d'algorithmes d'authentification selon lesdites secondes procédures d'authentification, transmettre une réponse d'authentification selon lesdites secondes procédures d'authentification de la station mobile au réseau d'accès radio avec une signalisation selon lesdites premières procédures d'authentification.

**12.** Procédé selon la revendication 11, **caractérisé par** les étapes consistant à

dériver une clef de chiffrement utilisée dans la communication entre la station mobile et le réseau d'accès radio à partir d'un ou plusieurs desdits seconds paramètres d'authentification.

**13.** Système de communication mobile comportant une première couche d'infrastructure de réseau d'accès radio (TETRA) présentant des premières procédures d'authentification et des premiers paramètres d'authentification (RS, RAND 1, KS, KS', DCK), et une seconde couche d'infrastructure de réseau superposée (GSM) présentant des secondes procédures d'authentification et des seconds paramètres d'authentification (RAND, SRES, Kc), **caractérisé par**

des moyens en vue d'exécuter l'authentification initiale d'une station mobile (MS) avec les secondes procédures d'authentification et les seconds paramètres d'authentification (RAND, SRES, Kc) afin d'authentifier la station mobile (MS) dans la seconde couche d'infrastructure de réseau (GSM), des moyens en vue de dériver les premiers paramètres d'authentification (RS, RAND1, KS, KS', DCK) pour la première couche d'infrastructure de réseau d'accès radio (TETRA) à partir desdits seconds paramètres d'authentification (RAND, SRES, Kc) au cours de ladite authentification initiale, des moyens en vue d'utiliser lesdits premiers paramètres d'authentification dérivés (RS, RAND1, KS, KS', DCK) pour une quelconque authentification subséquente dans la première couche d'infrastructure de réseau d'accès radio (TETRA) jusqu'à l'authentification initiale suivante dans la seconde couche d'infrastructure de réseau superposée (GSM).

**14.** Système selon la revendication 13, **caractérisé en ce que**

la seconde couche d'infrastructure de réseau superposée (GSM) et la station mobile (MS) sont agencées en vue de générer une première clef de chiffrement (Kc) pour la seconde couche d'infrastructure de réseau superposée au cours de ladite authentification initiale dans la seconde couche d'infrastructure de réseau superposée (GSM) et la station mobile (MS), la première couche d'infrastructure de réseau d'accès radio (TETRA) et la station mobile (MS) étant agencées en vue de dériver une seconde clef de chiffrement (DCK) pour la première couche d'infrastructure de réseau d'accès radio à partir de ladite première clef de chiffrement (Kc), la première couche d'infrastructure de réseau d'accès radio (TETRA) et la station mobile (MS) étant agencées en vue d'utiliser ladite seconde clef de chiffrement (DCK) afin de chiffrer une communication entre la station mobile et la première couche d'infrastructure de réseau d'accès radio.

**15.** Système selon la revendication 13 ou 14, **caractérisé en ce que**

la première couche d'infrastructure de réseau d'accès radio (TETRA) est agencée en vue de transférer un ou plusieurs desdits premiers paramètres d'authentification dérivés (RS, RAND1) à la station mobile (MS) au cours de ladite authentification initiale, la station mobile (MS) est agencée en vue de rétablir au moins un desdits seconds paramètres d'authentification (RAND) à partir dudit un ou desdits plusieurs premiers paramètres d'authentification dérivés reçus afin de permettre ladite authentification initiale.

**16.** Système selon la revendication 13, 14 ou 15, **caractérisé en ce que**

la première couche d'infrastructure de réseau d'accès radio (TETRA) et la station mobile (MS) sont agencées en vue de dériver une ou plusieurs clefs d'authentification de session (KS, KS') à partir de ladite première clef d'authentification secrète (Kc) afin d'être utilisées dans lesdites authentifications ultérieures dans la première couche d'infrastructure de réseau d'accès radio (TETRA).

**17.** Système selon la revendication 16, **caractérisé en ce que**

la première couche d'infrastructure de réseau d'accès radio (TETRA) et la station mobile (MS) sont agencées en vue d'utiliser une ou plusieurs clefs d'authentification de session (KS, KS') afin de générer d'autres paramètres d'authentification (RES1, XRES 1) dans lesdits authentifications ultérieures.

**18.** Système selon la revendication 13, **caractérisé par**

des moyens en vue de transférer un ou plusieurs desdits premiers paramètres dérivés (RS, RAND1) à la station mobile sur l'interface radio,
des moyens en vue de rétablir un ou plusieurs desdits seconds paramètres d'authentification (RAND) à la station mobile afin de permettre l'utilisation d'algorithmes d'authentification (A3, A8s) selon lesdites secondes procédures d'authentification,
des moyens en vue de transmettre une réponse d'authentification (SRES) selon lesdites secondes procédures d'authentification de la station mobile (MS) au premier réseau d'accès radio (TETRA) avec une signalisation selon lesdites premières procédures d'authentification.

**19.** Système selon la revendication 18, **caractérisé par**

des moyens en vue de dériver une clef de chiffrement (DCK) utilisée dans la communication entre la station mobile (MS) et le premier réseau d'accès radio (TETRA) à partir d'un ou plusieurs desdits seconds paramètres d'authentification (Kc).

**20.** Station mobile destinée à un système de communication mobile comportant une première couche d'infrastructure de réseau d'accès radio (TETRA) présentant des premières procédures d'authentification et des premiers paramètres d'authentification (RS, RAND1, KS, KS', DCK), et une seconde couche d'infrastructure de réseau superposée (GSM) présentant des secondes procédures d'authentification et des seconds paramètres d'authentification (RAND, SRES, Kc), **caractérisée par**

des moyens en vue de recevoir un ou plusieurs premiers paramètres d'authentification (SS, RAND1) à partir de la première couche d'infrastructure de réseau d'accès radio (TETRA) au cours d'une authentification initiale avec les secondes procédures d'authentification et les seconds paramètres d'authentification afin d'authentifier la station mobile dans la seconde couche d'infrastructure de réseau superposée,
des moyens en vue de dériver un ou plusieurs des seconds paramètres d'authentification (RAND) à partir dudit un ou desdits plusieurs premiers paramètres reçus,
des moyens en vue de calculer une première clef de chiffrement (Kc) et une réponse (SRES) à partir dudit un ou desdits plusieurs seconds paramètres d'authentification dérivés (RAND) au moyen d'algorithmes d'authentification (A3, A8s) des secondes procédures d'authentification de réseau superposées,
des moyens en vue de dériver une seconde clef de chiffrement (DCK) pour le chiffrement de la première couche d'infrastructure de réseau d'accès radio à partir de ladite première clef de chiffrement (Kc),
des moyens en vue de transmettre ladite réponse calculée (SRES) à l'infrastructure de réseau.

**21.** Station mobile selon la revendication 20, **caractérisée par**

des moyens en vue de dériver une ou plusieurs clefs d'authentification de session (KS, KS') à partir de ladite première clef de chiffrement (Kc),
des moyens en vue d'utiliser ladite une ou lesdites plusieurs clefs d'authentification de session dérivées (KS, KS') d'une quelconque des premières procédures d'authentification subséquentes à l'authentification initiale.

**Fig. 1**

**Fig. 2**

**Fig. 3**

**Fig. 4**

Fig. 5

| | | MSC/VLR |
|---|---|---|
| RAND | SRES | Kc |

**DXT**

RAND | Kc | FIXc

| RAND | | Kc | FIXc |
|---|---|---|---|
| 80 | 48 | 64 | 64 |

FIXc'

| 64 |
|---|

RS    KS    KS'

Standard TETRA procedures

Fig. 7

**DXT**

Kc | FIXc | FIXc'

| 64 | 64 | 64 |
|---|---|---|

RS    KS    KS'

ISI or DXTH (RS,KS,KS')

**TETRA layer**

RAND1 → TA12 → DCK1

XRES1    R1

**MS**

K

A8S    FIXc

Kc    TA11

RES1

TA12 → DCK1

KS

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 971516I A
- EP 0955783 A
- WO 9605702 A
- EP 0673178 A
- WO 9317529 A